# EUROPEAN PATENT APPLICATION

(11) **EP 1 179 907 A2**
(43) Date of publication of application: **13.02.2002**
(21) Application number: 01306769.9
(22) Date of filing: 08.08.2001
(51) Int. Cl.: H04L 1/00

(54) **Data communication apparatus and method with error correction mode**

(30) Priority: 08.08.2000 JP 2000239671
(71) Applicant: Pioneer Corporation, Tokyo-to (JP)
(72) Inventor: Tokudome, Kenichi, c/o Pioneer Corporation, Tokorozawa shi, Saitama-ken (JP)
(74) Representative: Townsend, Victoria Jayne

(57) **Abstract**

A transmission system (S) includes an MPU (11) that, when a data transmission error occurs, reduces a transmission speed to such a value as not to cause the transmission error to occur. The system (S) further includes a nonvolatile memory (16) that stores the reduced transmission speed. The MPU (11) detects a change in connection mode with a host (H), and transmits data at the stored transmission speed when no change in connection mode is detected, and resets the transmission speed to an initial value to transmit the data at the initial value when a change in connection mode is detected.

## Description

### BACKGROUND OF THE INVENTION

### 1. Field of the Invention

The present invention relates generally to a transmission controlling apparatus and method, and more particularly to a transmission controlling apparatus and a transmission control method for data transmission to and from a destination, a data processing unit including the transmission controlling apparatus, and a data recording medium having a transmission controlling program recorded for implementing the transmission controlling method.

### 2. Description of Related Art

Amid rapid progress made recently toward networking a plurality of data processing units, there is a growing demand for optimizing their communication environment in order to accomplish smooth transmission of necessary data within the network.

When these networked data processing units suffer from a transmission error, such as incorrect data transmission or connection failure due to rejection by one of the units (hereinafter referred to simply as "transmission error") during data transmission, a traditional transmission controller for these networked units controls the data transmission to eliminate the error in the following way. The controller first reduces a high transmission speed, which is considered to be a major cause of the transmission error, in order to eliminate the error, and then stores the reduced transmission speed and resumes the current transmission or starts the transmission again, at the stored reduced transmission speed.

A typical example of a transmission error between the networked data processing units (e.g., a personal computer and a disk drive) is that the impedance of a cable interconnecting the units is out of the tolerance specified for each unit.

Further, an example of a transmission error within one of the networked data processing units is that the resistance of a terminator (terminating processing unit) within such one of the data processing units is so incompatible with the other data processing unit or with a connection cable interconnecting them that signals from the other data processing unit are reflected by the data processing unit provided with the terminator, thereby causing the transmission error.

To eliminate these transmission errors, the traditional transmission controller reduces the current transmission speed, as mentioned above. However, the traditional controller stores the reduced transmission speed in a volatile memory, and thus, even when the transmission errors are suppressed by reducing the transmission speed, if the units are turned off and then turned on again to resume the current data transmission, for example, the reduced transmission speed stored in the memory is reset to an initial transmission speed which was set before the reduction, thereby causing the transmission errors again.

Further, once the transmission speed is reduced, even when one of the networked units has its connection environment with the destination improved, such a unit has to continue the current transmission with the destination at the reduced transmission speed, and this would impair the network capability.

### SUMMARY OF THE INVENTION

The present invention has been made in view of the above problems, and an object thereof is, therefore, to provide a transmission controlling apparatus and transmission controlling method capable of data communication in an optimal one of error-free transmission modes, a data processing unit including the transmission controlling apparatus, and a data recording medium having a transmission controlling program recorded for implementing the transmission control method.

The above object of the present invention can be achieved by a transmission controlling apparatus of the present invention having a changing device for, when a transmission error occurs during transmission of data, changing a transmission mode for said data to such an error-free mode as not to cause said transmission error to occur. The apparatus is provided with: a nonvolatile storing device for storing said error-free mode; a detecting device for detecting a change in connection mode with a destination of said data; and a control device for transmitting said data in said stored error-free mode when said change in connection mode is not detected, and resetting said transmission mode to an initial mode to transmit said data, when said change in connection mode is detected.

According to the present invention, when the change in the connection mode with the destination is not detected, the data is transmitted in the error-free mode stored in the nonvolatile storing device, whereby the recurrence of the transmission error can be prevented even after the controller and the destination are turned off and then turned on again. Further, when the change in the connection mode is detected, the transmission mode for the data is reset to the initial mode to transmit the data, whereby the data can be transmitted in the initial mode which is better, if the change is made to improve the connection mode. As a result, data communication can be carried out in an optimal one of error-free transmission modes.

In one aspect of the present invention, said control device resets said error-free mode to said transmission mode which is optimal when said change in connection mode is detected.

According to this aspect, when the change in the connection mode is detected, the error-free mode is reset to the transmission mode which is optimal, whereby the data can be transmitted in the optimal mode, if the change is made to improve the connection mode.

In another aspect of the present invention, said detecting device detects said change in connection mode when having detected a detachment/attachment as to at least one connection cable for connection with said destination.

According to this aspect, the transmission mode can be controlled through detection of a cable detachment/attachment which is most likely to improve the connection mode.

In further aspect of the present invention, said detecting device is a mechanical switch for detecting said detachment/attachment as to said at least one connection cable.

According to this aspect, the transmission mode can be controlled through reliable detection of a detachment/attachment as to the connection cable.

In further aspect of the present invention, said detecting device detects said change in connection mode when a specification of data transmitted from said destination is changed.

According to this aspect, the change in the connection mode is detected upon change in the specification of data for transmission, whereby no mechanical arrangement is involved to detect the change in the connection mode, and hence reliability in detecting the change in the connection mode can be improved.

In further aspect of the present invention, said transmission mode is a transmission speed for transmitting said data to said destination.

According to this aspect, the data can be transmitted at the error-free, optimal transmission speed.

In further aspect of the present invention, said error-free mode is said transmission mode in which said transmission speed is reduced.

According to this aspect, the recurrence of the transmission error can be prevented reliably.

The above object of the present invention can be achieved by an information processing unit of the present invention. The unit is provided with: (i) a transmission controlling apparatus having a changing device for, when a transmission error occurs during transmission of data, changing a transmission mode for said data to such an error-free mode as not to cause said transmission error to occur, said apparatus comprising: a nonvolatile storing device for storing said error-free mode; a detecting device for detecting a change in connection mode with a destination of said data; and a control device for transmitting said data in said stored error-free mode when said change in connection mode is not detected, and resetting said transmission mode to an initial mode to transmit said data, when said change in connection mode is detected; and (ii) processing means for performing a data process using said data transmitted from said destination.

According to the present invention, when the change in the connection mode with the destination is not detected, the data is transmitted in the error-free mode stored in the nonvolatile storing device, whereby the recurrence of the transmission error can be prevented even after the controller and the destination are turned off and then turned on again. Further, when the change in the connection mode is detected, the transmission mode for the data is reset to the initial mode to transmit the data, whereby the data can be transmitted in the initial mode which is better, if the change is made to improve the connection mode. As a result, the data can be processed through data transmission in the error-free, optimal transmission mode.

In one aspect of the present invention, said control device resets said error-free mode to said transmission mode which is optimal when said change in connection mode is detected.

According to this aspect, when the change in the connection mode is detected, the error-free mode is reset to the transmission mode which is optimal, whereby the data can be transmitted in the optimal mode, if the change is made to improve the connection mode.

In another aspect of the present invention, said detecting device detects said change in connection mode when having detected a detachment/attachment as to at least one connection cable for connection with said destination.

According to this aspect, the transmission mode can be controlled through detection of a cable detachment/attachment which is most likely to improve the connection mode.

In further aspect of the present invention, said detecting device is a mechanical switch for detecting said detachment/attachment as to said at least one connection cable.

According to this aspect, the transmission mode can be controlled through reliable detection of a detachment/attachment as to the connection cable.

In further aspect of the present invention, said detecting device detects said change in connection mode when a specification of data transmitted from said destination is changed.

According to this aspect, the change in the connection mode is detected upon change in the specification of data for transmission, whereby no mechanical arrangement is involved to detect the change in the connection mode, and hence reliability in detecting the change in the connection mode can be improved.

In further aspect of the present invention, said transmission mode is a transmission speed for transmitting said data to said destination.

According to this aspect, the data can be transmitted at the error-free, optimal transmission speed.

In further aspect of the present invention, said error-free mode is said transmission mode in which said transmission speed is reduced.

According to this aspect, the recurrence of the transmission error can be prevented reliably.

The above object of the present invention can be achieved by a method of controlling transmission of the present invention including a process of changing, when a transmission error occurs during transmission of data, a transmission mode for said data to such an error-free mode as not to cause said transmission error to occur, said method comprising the processes of: storing said error-free mode in a nonvolatile storing device; detecting a change in connection mode with a destination; and effecting control such that said data is transmitted in said stored error-free mode when said change in connection mode is not detected, and said transmission mode is reset to an initial mode to transmit said data, when said change in connection mode is detected.

According to the present invention, when the change in the connection mode with the destination is detected, the data is transmitted in the error-free mode stored in the nonvolatile memory, whereby the recurrence of the transmission error can be prevented even after the controller and the destination are turned off and then turned on again. Further, when the change in the connection mode is detected, the transmission mode for the data is reset to the initial mode to transmit the data, whereby the data can be transmitted in the initial mode which is better, if the change is made to improve the connection mode. As a result, the data can be processed through data transmission in the error-free, optimal transmission mode.

The above object of the present invention can be achieved by a computer-readable data recording medium of the present invention having a transmission control program recorded therein, such that a control computer, which is included in a transmission controlling apparatus having changing device for, when a transmission error occurs during transmission of data, changing a transmission mode for said data to such an error-free mode as not to cause said transmission error to occur, said transmission control program causing the control computer to function as: a storage control device for causing nonvolatile storing device to store said error-free mode; a detecting device for detecting a change in connection mode with a destination; and a control device for transmitting said data in said stored error-free mode when said change in connection mode is not detected, and resetting said transmission mode to an initial mode to transmit said data, when said change in connection mode is detected.

According to the present invention, when the change is made in the connection mode with the destination, the control computer functions so as to transmit the data in the stored error-free mode, whereby the recurrence of the transmission error can be prevented even after the controller and the destination are turned off and then turned on again. Further, when the change in the connection mode is detected, the control computer functions so as to reset the transmission mode to the initial mode to transmit the data, whereby the data can be transmitted in the initial mode is better, if the change is made to improve the connection mode. As a result, the data can be processed through data transmission in the error-free, optimal transmission mode.

### BRIEF DESCRIPTION OF THE DRAWINGS

FIG. 1 is a block diagram showing the general configuration of a transmission system according to an embodiment of the invention;
FIG. 2 is a flowchart showing a transmission speed control routine according to an embodiment of the invention; and
FIG. 3 is a diagram showing an example of what is stored in a nonvolatile memory.

### DETAILED DESCRIPTION OF THE PREFERRED EMBODIMENTS

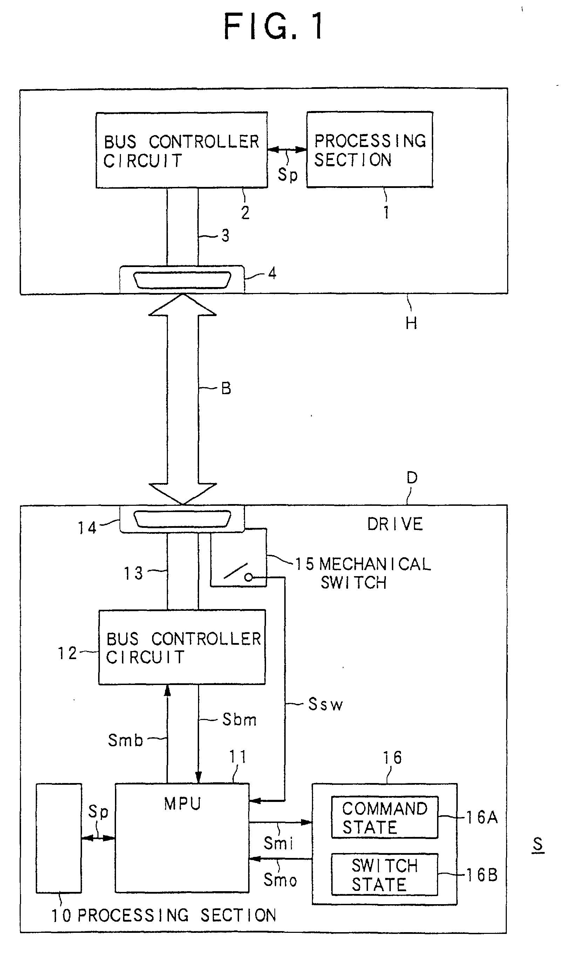

The present invention will now be described with reference to preferred embodiments shown in FIGS. 1 to 3.

The following embodiments relate to a case where the invention is applied to a transmission system for data communication between a host, such as a personal computer that executes a preset data process, and a drive, such as a disk drive that executes another data process corresponding to the preset data process executed by the host, which includes, e.g., a process of reading from a recording medium (not shown) data which the host needs for its preset data process.

First, the general configuration of the transmission system according to an embodiment will be described with reference to FIG. 1.

As shown the figure, a transmission system S according to this embodiment is comprised of the host H, the drive D, and a connection cable B connecting the host H to the drive D for bidirectional data communication.

The host H includes a processing section 1, a bus controller 2, a bus 3, and a connector 4. The processing section 1 executes a data process as the host H, while exchanging process signals Sp with the bus controller circuit 2. The circuit 2 outputs data corresponding to process signals Sp supplied from the processing section 1 to the drive D via the connection cable B, and generates process signals Sp corresponding to data obtained from the drive D via the cable B and outputs the generated signals Sp to the section 1. The process signals Sp supplied from the processing section 1 contains the data which the processing section 1 must supply to the drive D. The data obtained from the drive D is one which the drive D must supply to the section 1. The bus 3 connects the bus controller circuit 2 to the connector 4 that connects the cable B to the host H, more specifically, to the bus controller circuit 2 mechanically.

The drive D includes a processing section 10, an MPU (Main Processing Unit) 11, a bus controller circuit 12, a bus 13, a connector 14, a mechanical switch 15, and a nonvolatile memory 16. The processing section 10, as processing device, executes a data process as the drive D while exchanging process signals Sp with the MPU 11. The MPU 11, as changing and control device, outputs the data corresponding to process signals Sp supplied from the section 10 to the bus controller circuit 12 as bus signals Smb, generates process signals Sp corresponding to the data supplied from the circuit 12 as bus signals Sbm and outputs the generated signals Sp to the section 10, and further executes a transmission control routine according to an embodiment, which will be described hereinafter. The bus controller circuit 12 outputs the bus signals Smb received from the MPU 11, to the host H via the connection cable B, and further generates the bus signals Sbm corresponding to the data obtained from the host H via the cable B and outputs the generated signals Smb to the MPU 11, based on the transmission control routine executed by the MPU 11. The bus 13 connects the bus controller circuit 12 to the connector 14 that connects the connection cable B to the drive D, more specifically, to the bus controller circuit 12 mechanically. The mechanical switch 15, as detecting device/mechanical device, detects a detached state and an attached state as to the connection cable B, and supplies to the MPU 11 a detection signal Ssw indicating each of the detached and attached states of the connection cable B. The memory 16, as storing device, is of a nonvolatile type, and exchanges necessary data with the MPU 11 as memory signals Smi and Smo, and temporarily stores the memory signals Smi as input data. The process signals Sp supplied from the section 10 contains the data which the section 10 must supply to the host H. The data supplied from the circuit 12 as bus signals Sbm is one which the host H must supply to the section 10. In the nonvolatile type memory 16, its stored data is undisturbed by removal of operating power to the drive D.

The mechanical switch 15 can detect two or more states one at a time every time a connection cable B is mechanically detached from or a connection cable B is mechanically attached to the connector 14. The switch 15 supplies to the MPU 11 the detection signal Ssw corresponding to a changed state every time it detects the changed state. In other words, the state of the mechanical switch 15 indicated by a detection signal Ssw is changed every time a set of operations is performed, the set of operations consisting of an operation of detaching a connection cable B from the connector 14 and an operation of attaching a connection cable B to the connector 14. The state of the switch 15 supplied to the MPU 11 is temporarily stored in the nonvolatile memory 16.

Within the memory 16, there are provided a command state area 16A for temporarily storing the states of command signals sequentially sent from the host H via the connection cable B, and a switch state area 16B for temporarily storing the above-mentioned states of the mechanical switch 15. Additionally, the memory 16 temporarily stores a transmission speed at which data is transmitted via the cable B, which will be described hereinafter.

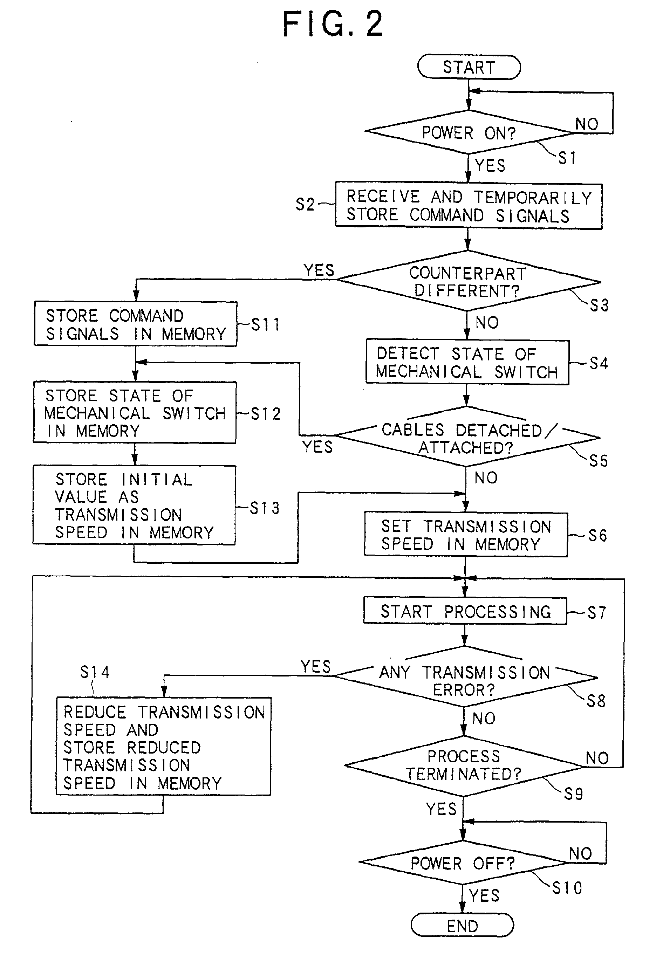

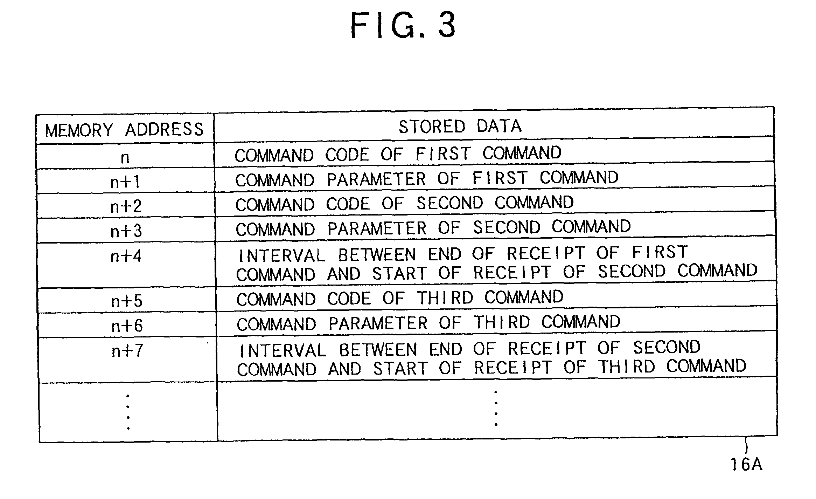

Next, the transmission control routine according to an embodiment, which is executed mainly by the MPU 11, will be described with reference to FIGS. 2 and 3. The following description is based on the assumption that a transmission error occurred during a previous execution of this routine.

As shown in FIG. 2, in the transmission control routine according to this embodiment, which is executed by the drive D, the MPU 11 determines whether both the drive D and the host H are turned on (Step S1). If they are not turned on (Step S1; NO), the MPU 11 waits until they are turned on. Otherwise, if they are turned on (Step S2; YES), the MPU 11 receives the command signals sequentially sent from the host H for temporary storage within registers, etc. (not shown) (Step S2).

Upon temporary storage of contents, etc. of the command signals sent from the host H, the MPU 11 compares the contents temporarily stored data with contents, etc. of command signals previously stored in the command state area 16A to determine whether the host H currently connected to the drive D is of the same type as the host H that sent the previously stored command signals, based on the results of the comparison (Step S3).

If the MPU 11 has determined, from the fact that the contents temporarily stored signal are identical with those of the previously stored command signals, that the host H of the same type is connected to the drive D before and after it is determined at Step S1 that the host H and the drive D are turned on ("NO" at Step S3), then the MPU 11 detects any change in the state of the mechanical switch 15 made up to Step S1 at which it is determined that the host H and the drive D are turned on, i.e. the MPU 11 checks if a detachment/attachment as to the cable B is performed up to the moment at which the host H and the drive D are turned on (Steps S4 and S5).

When the answer at Step S5 is "NO" (Step S5; NO), the MPU 11, recognizing that no change is made as to the type of host H and the cable detachment/attachment before and after Step S1 at which it is determined that the host H and the drive D are turned on, sets to a register (not shown) within the bus controller circuit 12 a transmission speed stored in the nonvolatile memory 16 when Step S14, which will be described hereinafter, was executed during the previous execution of the routine shown in FIG. 2, such that the host H and the drive D exchange data via the cable B using such transmission speed previously stored in the nonvolatile memory 16 (Step S6). Thereafter, the drive D starts exchange the data with the host H at the transmission speed stored to perform a required data process between the host H and the drive D (Step S7).

If no transmission error has occurred up to Step S6, the MPU 11 uses, at Step S6, an initial value of the transmission speed which was set at the start of the execution of this routine, not the above-mentioned transmission speed stored in the nonvolatile memory 16.

During the execution of the required data process between the host H and the drive D, the MPU 11 constantly keeps checking if any transmission error occurs to block normal communication of necessary data through the cable B (Step S8).

If no transmission error occurs during the check, i.e., when the current transmission speed is appropriate ("NO" at Step S8), the MPU 11 keeps executing the required data process, and then determines whether or not the required data process is completed (Step S9).

If the required data process is not yet completed ("NO" at Step S9), then the MPU 11 returns to Step S7 to continue the data process. Whereas if the required data process is completed ("YES" at Step S9), the MPU 11 confirms that an instruction to turn off the drive D is provided by an operation section (not shown) (Step S10). If the drive D has not yet been turned off ("NO" at Step S10), the MPU 11 waits, and if the drive D has been turned off ("YES" at Step S10), it terminates all the steps of the transmission control routine.

On the other hand, when the transmission error occurs during the check at Step S8 ("YES" at Step S8), the MPU 11 changes the contents of the register in the bus controller circuit 12 so that the current transmission speed is reduced to such a value as to eliminate the transmission error, further stores this reduced transmission speed in the nonvolatile memory 16 (Step S14), and then returns to Step S7 to continue the required data process between the host H and the drive D.

If, on the other hand, the MPU 11 determines at Step S5 that a detachment/attachment as to the cable B is performed based on a detection signal Ssw indicating a changed state of the mechanical switch 15 ("YES" at Step S5), the MPU 11 stores the detected changed state of the mechanical switch 15 in the switch state area 16B (Step S12), and also stores an initial value as the transmission speed in the nonvolatile memory 16 (Step S13), after which the MPU 11 goes to Step S6 to start the above-mentioned required data process.

At Step S13, it is preferable to set the highest transmission speed as the initial value, which is allowed for the current connection environment. More specifically, in a connection environment conforming to ATAPI (AT Attachment Packet Interface) standard, for example, the highest transmission speed is preset for each type of connection cable B usable for the connection environment. Thus, once the host H or the drive D recognizes a type of cable B used, the MPU 11 can set the initial transmission speed to a value near the highest transmission speed preset for that type of cable B used.

Thereafter, the MPU 11 successively reduces the transmission speed (Step S14) every time a transmission error occurs during the execution of the required data process ("YES" at Step S8), whereby the MPU 11 continues the same process at the reduced transmission speed.

If the MPU 11 determines at Step S3 that the type of host H is changed, from the result of the comparison made between the current and previous command signal data ("YES" at Step S3), then the MPU 11 stores the currently received command signal data in the command state area 16A (Step S11).

As shown in FIG. 3, the command signal data stored in the command state area 16A includes, in the order of memory addresses within the area 16A, a command code (an instruction code; the same applies hereinafter) of a first command signal (a first command signal sent from the host H after the host H is turned on), a command parameter (additional data appended to a command signal; the same applies hereinafter) of the first command signal, a command code of a second command signal (a second command signal sent from the host H after the host H is turned on), a command parameter of the second command signal, a first interval between the end of receipt of the first command signal and the start of receipt of the second command signal (a predetermined interval is set for each type of host H; the same applies hereinafter), a command code of a third command signal, a command parameter of the third command signal, and a second interval between the end of receipt of the second command signal and the start of receipt of the third command signal.

Which data are to be stored in the area 16A may be selectable. For example, all the command signals sent from the host H may be stored during initial setting performed by each of the host H and the drive D.

It may alternatively be arranged so as to exclude uncertainties that would be associated with any change made in the settings of the host H. That is, even when the host H changes some of its settings to modify its operating environment, only those command signals which is unchanged and sent from the host H may be stored.

More specifically, if the host H is a personal computer, for example, the host H supplies command codes to the drive D when the host H is turned on. The host H usually generates the command codes during the course of switching the stage of control from that of BIOS (Basic Input Output System) to that of an operating system (OS). During the BIOS control, the host H sends command codes unique to itself to the drive D every time the host H is turned on, whereas, during the OS control, the host H may sometimes change its command codes as a result of the host H, etc. changing some of their settings used in the previous operation. Thus, by using only the command codes sent during the BIOS control for mutual authentication, one can exclude uncertainties which are likely to arise from performing such mutual authentication during the OS control.

Once the command signal data have been stored in the nonvolatile memory 16, the MPU 11 detects the current state of the mechanical switch 15 based on a detection signal Ssw, and stores the detected state in the switch state area 16B (Step S12), after which the MPU 11 executes the steps S13, S6 to S10, and S14.

As described in the foregoing, when no change is detected as to the connection mode with the host H before and after the host H and the drive D are turned on, the transmission control routine according to this embodiment allows the transmission speed stored in the memory 16 (see Step S14) to be used for data transmission, whereby the recurrence of the transmission error can be prevented after the transmission error occurs and the host H and the drive D are turned off, and then turned on again to resume the data transmission.

Further, when a change in the connection mode is detected, the routine resets the transmission speed to the initial value (see Step S13) for data transmission until a transmission error occurs, whereby the data transmission can be performed at the initial transmission speed, if the change is made to improve the connection mode.

Still further, the routine detects a change in the connection mode when a detachment/attachment as to the cable B is detected. Thus, if the routine detects a cable detachment/attachment which is most likely to improve the connection mode, the transmission mode can be controlled through such detection.

Even further, it is the mechanical switch 15 that detects a detachment/attachment as to the cable B, whereby the transmission mode can be controlled through reliable detection of a detachment/attachment as to the cable B.

Even further, the routine detects a change in the connection mode when the command signal data are changed, whereby reliability in detecting a change in the connection mode can be improved.

Still further, when a transmission error occurs, the transmission speed is reduced (see Step S14), whereby the recurrence of the transmission error can be reliably prevented.

Even further, when a change in the connection mode is detected, the transmission speed is reset to the initial value (see Step S13), whereby data transmission can be performed in the connection mode which could be optimal, if the change is made to improve the connection mode.

While the example in which the command code, command parameter, etc. of each command signal are treated as the data for storage in the command state area 16A has been described in the above embodiment, similar advantages can be obtained by storing only the command code of each command signal per command signal. In this case, the command state area 16A can be minimized.

While the example in which the data transmission speed is reset to the initial value (see Step S13) upon detection of a change in the connection mode has been described in the above embodiment, as an alternative to such example, various modes and settings of the drive D may be reset to their initial or other preset states.

Further, when a host H sends a command signal to a drive D to request the drive D to identify its type, one OS installable in the host H accepts, when the drive D returns to the host H a reply signal indicating the drive D itself, such reply signal, and another OS installable in the host H accepts only a specific type of reply signal, rejecting any reply signal other than such specific type of reply signal as a transmission error. Under these circumstances, a drive D which is likely to be connected to hosts H respectively using these OSs may have the following settings. It may be arranged such that the drive D is initially set to return the reply signal indicating the drive D itself in consideration of the possibility that the drive D will be connected to a host H using the former OS, and such that when the drive D is connected to a host H using the latter OS and has recognized that the latter OS is used by such host H, the drive D is set to return the specific reply signal acceptable by the latter OS and this setting is stored in the nonvolatile memory 16. Even in this case, upon detection of a change in the connection mode, the current setting is automatically reset to the initial setting such that the drive D returns the reply signal acceptable by the former OS, as described in the above embodiment, whereby user-friendliness can be improved.

While the example in which the above-described transmission control routine is executed only by the drive D has been described in the above embodiment, an alternative is that the same routine is executed only by the host H through its bus controller circuit 2.

As another alternative, the above-described transmission control routine may be executed while both the host H and the drive D are exchanging their data with each other.

Further, a program corresponding to the flowchart shown in FIG. 2 is stored in a data recording medium, such as a flexible disk, a hard disk, etc., and is read and executed by a personal computer or other CPUs, etc., whereby the personal computer or the other CPUs, etc. can function as the above-described MPU 11.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. A transmission controlling apparatus (D) having a changing device (11) for, when a transmission error occurs during transmission of data, changing a transmission mode for said data to such an error-free mode as not to cause said transmission error to occur, **characterized in that** said apparatus comprises:
a nonvolatile storing device (16) for storing said error-free mode;
a detecting device (15) for detecting a change in connection mode with a destination of said data; and
a control device (11) for transmitting said data in said stored error-free mode when said change in connection mode is not detected, and resetting said transmission mode to an initial mode to transmit said data, when said change in connection mode is detected.

2. The transmission controlling apparatus (D) according to claim 1, wherein said control device (11) resets said error-free mode to said transmission mode which is optimal when said change in connection mode is detected.

3. The transmission controlling apparatus (D) according to claim 1 or 2, wherein said detecting device (15) detects said change in connection mode when having detected a detachment/attachment as to at least one connection cable (B) for connection with said destination.

4. The transmission controlling apparatus (D) according to claim 3, wherein said detecting device (15) is a mechanical switch for detecting said detachment/attachment as to said at least one connection cable (B).

5. The transmission controlling apparatus (D) according to claim 1 or 2, wherein said detecting device (15) detects said change in connection mode when a specification of data transmitted from said destination is changed.

6. The transmission controlling apparatus (D) according to any one of claims 1 to 5, wherein said transmission mode is a transmission speed for transmitting said data to said destination.

7. The transmission controlling apparatus (D) according to any one of claims 1 to 6, wherein said error-free mode is said transmission mode in which said transmission speed is reduced.

8. An information processing unit (D) **characterized in that** the unit comprises:
(i) a transmission controlling apparatus (D) having a changing device (11) for, when a transmission error occurs during transmission of data, changing a transmission mode for said data to such an error-free mode as not to cause said transmission error to occur, said apparatus comprising: a nonvolatile storing device (16) for storing said error-free mode; a detecting device (15) for detecting a change in connection mode with a destination of said data; and a control device (11) for transmitting said data in said stored error-free mode when said change in connection mode is not detected, and resetting said transmission mode to an initial mode to transmit said data, when said change in connection mode is detected; and
(ii) processing means (10) for performing a data process using said data transmitted from said destination.

9. The information processing unit (D) according to claim 8, wherein said control device (11) resets said error-free mode to said transmission mode which is optimal when said change in connection mode is detected.

10. The information processing unit (D) according to claim 8 or 9, wherein said detecting device (15) detects said change in connection mode when having detected a detachment/attachment as to at least one connection cable (B) for connection with said destination.

11. The information processing unit (D) according to claim 10, wherein said detecting device (15) is a mechanical switch for detecting said detachment/attachment as to said at least one connection cable.

12. The information processing unit (D) according to claim 8 or 9, wherein said detecting device (15) detects said change in connection mode when a specification of data transmitted from said destination is changed.

13. The information processing unit (D) according to any one of claims 8 to 12, wherein said transmission mode is a transmission speed for transmitting said data to said destination.

14. The information processing unit (D) according to any one of claims 8 to 13, wherein said error-free mode is said transmission mode in which said transmission speed is reduced.

15. A method of controlling transmission including a process of changing, when a transmission error occurs during transmission of data, a transmission mode for said data to such an error-free mode as not to cause said transmission error to occur, said method comprising the processes of:
storing said error-free mode in a nonvolatile storing device (16);
detecting a change in connection mode with a destination; and
effecting control such that said data is transmitted in said stored error-free mode when said change in connection mode is not detected, and said transmission mode is reset to an initial mode to transmit said data, when said change in connection mode is detected.

16. A computer-readable data recording medium having a transmission control program recorded therein, such that a control computer, which is included in a transmission controlling apparatus (D) having changing device (11) for, when a transmission error occurs during transmission of data, changing a transmission mode for said data to such an error-free mode as not to cause said transmission error to occur, said transmission control program causing the control computer to function as:
a storage control device (11) for causing nonvolatile storing device (16) to store said error-free mode;
a detecting device (15) for detecting a change in connection mode with a destination; and
a control device (11) for transmitting said data in said stored error-free mode when said change in connection mode is not detected, and resetting said transmission mode to an initial mode to transmit said data, when said change in connection mode is detected.
